# EUROPEAN PATENT APPLICATION

(11) **EP 4 813 866 A1**
(43) Date of publication of application: **30.09.2026**
(21) Application number: 25166709.3
(22) Date of filing: 27.03.2025
(51) Int. Cl.: B65D 85/66, B60P 3/035, B60P 7/12

(54) **CARRYING ELEMENT AND METHOD OF CARRYING AN OBJECT ON A TRUCK**

(71) Applicant: Lankhorst Engineered Products B.V., 8607 AD Sneek (NL)
(72) Inventor: MEIJER, Karst, 8607 AD Sneek (NL)
(74) Representative: V.O.

(57) **Abstract**

A carrying element (1) for carrying a circular-cylindrical object is manufactured from LDPE. A longitudinal wedge-shaped groove (8) of the carrying element comprises planar first and second objectsupporting surface structures (11, 12), which are oriented at first and second acute angles (α1, α2) relative to an XY-plane. Each of the first and second acute angles is between 33 degrees and 43 degrees. A maximum groove width (Wmax) of the wedge-shaped groove (8) is between 500 mm and 1200 mm. The carrying element can be used to securely fasten rolls of steel plate of different diameters to a loading floor of a truck for transport on the road.

## Description

The invention relates to a carrying element for carrying a circular-cylindrical object, such as a roll of steel plate, on a truck for transporting said object. The invention further relates to a method of carrying such an object on a truck for transporting said object.

Typically the invention may relate to carrying rolls of steel plate on loading floors of trucks for transporting these rolls by road, wherein the rolls of steel plate may typically have different diameters in a range between 900 mm and 1250 mm, and weights in a range between 5 and 10 metric tonnes. In case such a roll would come loose and fall off from a truck during transport on a road, it will be clear that the rollable large mass of steel plate may have devastating effects. Accordingly, it goes without saying that such a roll needs to be very securely fastened to a loading floor of a truck.

It is an object of the present invention to provide a solution that reliably addresses the need to securely fasten such kind of rolls to a loading floor of a truck by using easy to handle and broadly applicable equipment.

For that purpose, the invention provides a carrying element according to the appended independent claim 1, as well as a method according to the appended independent claim 8. Preferable embodiments of the invention are provided by the appended dependent claims 2-7 and 9-10.

Hence, the invention provides a carrying element for carrying a circular-cylindrical object, such as a roll of steel plate, on a truck for transporting said object, wherein:
the carrying element has an underside and an upperside;
the underside comprises a planar floorcontacting surface structure formed by all parts of said underside which are contactingly lying against a horizontal floor when the carrying element is resting with the underside on a horizontal floor, wherein said planar floorcontacting surface structure is lying in an XY-plane of an XYZ-space defined by an X-axis, a Y-axis and a Z-axis, which are orthogonal relative to one another;
the upperside comprises a longitudinal wedge-shaped groove having a longitudinal groove direction, which is parallel to the Y-axis, wherein said longitudinal wedge-shaped groove comprises a planar first objectsupporting surface structure and a planar second objectsupporting surface structure, wherein said planar first objectsupporting surface structure and said planar second objectsupporting surface structure are oriented at a first acute angle and a second acute angle, respectively, relative to said XY-plane, in such manner that a groove width of said longitudinal wedge-shaped groove is decreasing as considered in a direction of increasing groove depth of said longitudinal wedge-shaped groove, said direction of increasing groove depth being directed parallel to the Z-axis and towards said underside of the carrying element, and wherein said groove width as a function of position along the Z-axis is defined as being measured between said planar first objectsupporting surface structure and said planar second objectsupporting surface structure and parallel to the X-axis;
the carrying element is manufactured from Low Density Polyethylene (LDPE);
the first acute angle is between 33 degrees and 43 degrees, and the second acute angle is between 33 degrees and 43 degrees; and
a maximum groove width of said groove width of said longitudinal wedge-shaped groove is between 500 mm and 1200 mm, wherein said maximum groove width is defined as being a largest one of all occurring values of said groove width as a function of position along the Z-axis.

Hence, in concise summary the key-features of a carrying element according to the invention are that:
- the carrying element is manufactured from LDPE;
- the upperside of the carrying element has the wedge-shaped groove, which comprises the first and second objectsupporting surface structures oriented at said first and second acute angles, each between 33 degrees and 43 degrees;
- said maximum groove width is between 500 mm and 1200 mm.

LDPE is known to have very low rigidity. Because of the very low rigidity it has never been considered to use LDPE as material to securely keep in place a roll of steel plate weighing between 5 and 10 metric tonnes and to prevent such a heavy roll from rolling-off from a driving truck travelling on the road.

Surprisingly, however, the inventor of the present invention has devised and found that the combination of the above-mentioned key-features in a carrying element according to the invention offers remarkable advantages. One such advantage is that one single design of a carrying element according to the invention allows to reliably receive a class of different rolls of steel plate within a broad range of different diameters and within a broad range of different weights. This is thanks to the finding that the carrying element with its wedge-shaped groove according to the combination of the above-mentioned key-features appears to have a remarkable deformation behaviour under the weight of a heavy roll received in its wedge-shaped groove. That is, the larger/heavier a received circular-cylindrical object is, the more the first and second objectsupporting surface structures of the wedge-shaped groove in the LDPE material appear to deform. And this deformation behaviour appears to be such that, in case of larger/heavier rolls, the deformed LDPE material more sizeably kind of 'embraces' the roll to the benefit of maintaining good fixation of the roll in the wedge-shaped groove. In fact, it has appeared that thereby the carrying element according to the invention automatically adapts its object fixation behaviour dependent on the diameter and weight of the circular-cylindrical object.

In a preferable embodiment of a carrying element according to the invention, the first acute angle is between 36 degrees and 40 degrees, and the second acute angle is between 36 degrees and 40 degrees.

In another preferable embodiment of a carrying element according to the invention, the first acute angle is equal to the second acute angle, with a permissible tolerance of 1 degree, at the most, for the difference between the first acute angle and the second acute angle.

More preferably, each of the first acute angle and the second acute angle is equal to 38 degrees.

In another preferable embodiment of a carrying element according to the invention, said maximum groove width is between 800 mm and 900 mm.

In another preferable embodiment of a carrying element according to the invention, the underside of the carrying element comprises a recessed exterior surface structure of the carrying element, wherein said recessed exterior surface structure, as compared to said planar floorcontacting surface structure which is lying in the XY-plane, is recessed in a direction parallel to the Z-axis and towards the upperside of the carrying element.

Said recessed exterior surface structure of the underside of the carrying element further improves the above-mentioned automatical adaptation of the object fixation behaviour dependent on the diameter and weight of the circular-cylindrical object.

In another preferable embodiment of a carrying element according to the invention, the carrying element, as considered in a view on the carrying element along the Z-axis, is enclosed by an imaginary rectangle in said XY-plane, said imaginary rectangle having two opposing first sides parallel to the X-axis and two opposing second sides parallel to the Y-axis, and said imaginary rectangle having four corner points, which additionally are four corner points, respectively, of four corner areas, respectively, of said planar floorcontacting surface structure of the carrying element. In use of the carrying element, said four corner areas of the planar floorcontacting surface structure are forming four powerful anchoring areas of the carrying element on a floor, thus providing extra resistance against sliding of the carrying element and extra stability against tilting of the carrying element.

In another preferable embodiment of a carrying element according to the invention, the carrying element, as considered in a view on the carrying element along the Z-axis, is enclosed by an imaginary rectangle in said XY-plane, said imaginary rectangle having two opposing first sides parallel to the X-axis and two opposing second sides parallel to the Y-axis, and wherein said two opposing first sides parallel to the X-axis are two side edges, respectively, of two strip-shaped areas, respectively, of said planar floorcontacting surface structure of the carrying element. In use of the carrying element, said two strip-shaped areas of the planar floorcontacting surface structure are forming two powerful anchoring strips of the carrying element on a floor, thus providing extra resistance against sliding of the carrying element and extra stability against tilting of the carrying element.

The present invention is further embodied in a method of carrying an object on a truck for transporting said object, wherein said object has a substantially circular-cylindrical outer exterior surface and a center line, and wherein the method comprises the steps of:
placing two carrying elements according to the invention with their two corresponding undersides, respectively, alongside one another on a loading floor of a truck, in such manner that the two longitudinal wedge-shaped grooves of the two carrying elements, respectively, are substantially in line with one another in a direction parallel to the Y-direction of each of the two carrying elements; followed by
placing said object on the two carrying elements, in such manner that the center line of the object is substantially parallel to the Y-direction of each of the two carrying elements, and in such manner that said exterior surface of the object is supported by the two first objectsupporting surface structures of the two carrying elements, respectively, as well as by the two second objectsupporting surface structures of the two carrying elements, respectively.

In a preferable embodiment of a method according to the invention, said steps are further followed by a further step of lashing down said object relative to the loading floor of the truck by means of one or more straps and/or one or more chains and/or the like. Such a combination of:
- the two carrying elements, manufactured from LDPE and carrying the object on the loading floor, and
- the one or more straps and/or one or more chains, and/or the like, lashing down said object relative to the loading floor,
appears to address the task to securely fasten a circular-cylindrical object to a loading floor of a truck remarkably well. Major reason for this is that, under the weight of a roll and under the tensioning force of the lashing means, the deformability of the LDPE of the carrying elements provides additional tightening interaction with the lashing means, as well as additional resistance against sliding of the carrying elements, as well as additional stability against tilting of the carrying elements, all of which synergetically improve the fastening of objects to loading floors of trucks. And this is achieved by using easy to handle and broadly applicable equipment in the form of the carrying elements and the lashing means (straps, chains and/or the like).

The method according to the invention works particularly well when said object is a roll of steel plate.

In the following, the invention is further elucidated with reference to nonlimiting embodiments and with reference to the schematic figures in the appended drawing, in which the following is shown.
Fig. 1A shows an example of an embodiment of a carrying element according to the invention, in a perspective view on the upperside of the carrying element.
Fig. 1B shows the carrying element of Fig. 1A again, however, this time in another perspective view, and this time on the underside of the carrying element.
Fig. 2A shows, in a perspective view, two carrying elements, each being identical to the carrying element of Fig. 1A, and both having been placed on a loading floor of a truck, and wherein a circular-cylindrical object has been placed on the two carrying elements.
Fig. 2B shows the same situation of Fig. 2A again, except for the difference that in Fig. 2B the two carrying elements, together with the circular-cylindrical object placed thereon, are in a different orientation relative to the loading floor of the truck.
Fig. 3 shows the carrying element of Fig. 1A in a side view along the Y-axis, wherein in Fig. 3 two circular-cylindrical outer exterior surfaces of two different circular-cylindrical objects have been shown to illustrate how different circular-cylindrical objects having considerably different diameters can be placed on the shown carrying element.
Fig. 4 shows the carrying element of Fig. 1A in a side view along the X-axis.
Fig. 5 shows the carrying element of Fig. 1A in a side view along the Y-axis.
Fig. 6 shows the carrying element of Fig. 1A in a view along the Z-axis, wherein the view is on the underside of the carrying element.
Fig. 7 shows the carrying element of Fig. 1A in a view along the Z-axis, wherein the view is on the upperside of the carrying element.
Figs. 8A-8D show the carrying element of Fig. 1A in four different longitudinal cross-sections indicated in Fig. 7 by the arrows A-A, B-B, C-C and D-D, respectively.
Fig. 9A shows part of the situation of Fig. 2A again, however, this time in a view from above, and wherein this time the circular-cylindrical object has been lashed down relative to the loading floor of the truck by means of a number of straps and/or chains and/or the like.
Fig. 9B shows the situation of Fig. 9A again, however, this time in a horizontal side view parallel to the centerline of the circular-cylindrical object.
Fig. 10A shows part of the situation of Fig. 2B again, however, this time in a view from above, and wherein this time the circular-cylindrical object has been lashed down relative to the loading floor of the truck by means of a number of straps and/or chains and/or the like.
Fig. 10B shows the situation of Fig. 10A again, however, this time in a horizontal side view perpendicular to the centerline of the circular-cylindrical object.

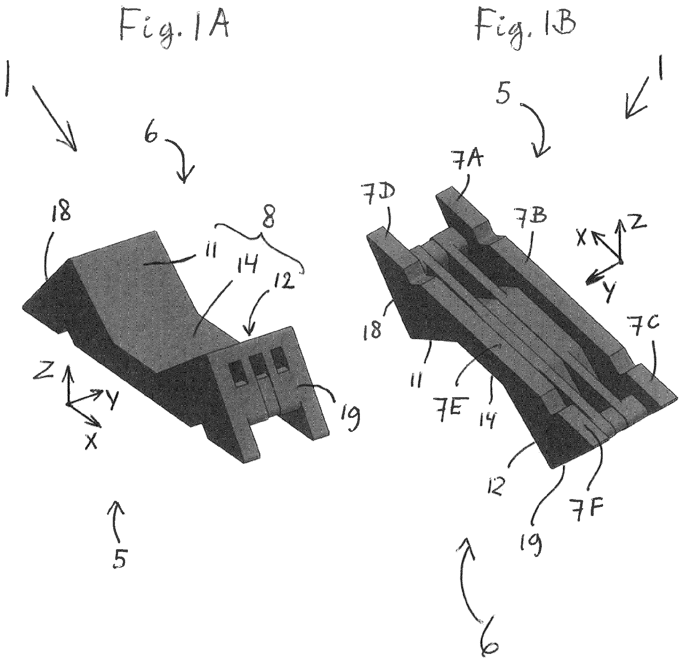

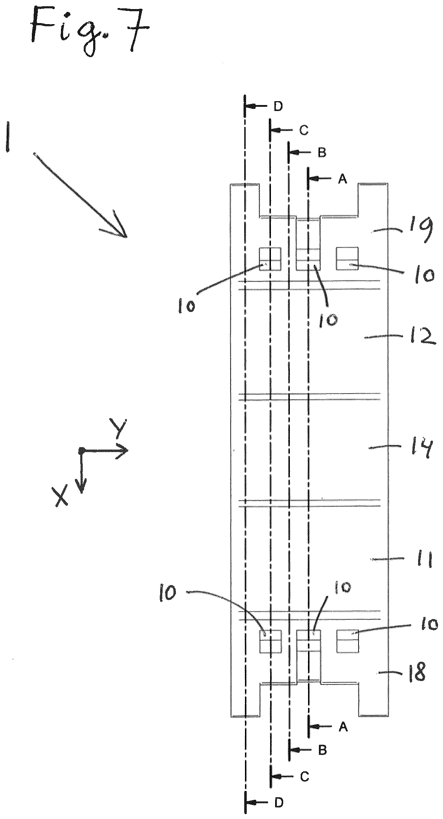

The reference signs used in the embodiments of Figs. 1-10 are referring to the above-mentioned parts and aspects of the invention, as well as to related parts and aspects, in the following manner:
- 1, 1A, 1B: carrying element
- 2, 2A: object
- 3: truck
- 4: loading floor
- 5: underside
- 6: upperside
- 7A, 7B, 7C, 7D, 7E, 7F: planar floorcontacting surface structure
- 8: wedge-shaped groove
- 9: recessed exterior surface structure
- 10: opening
- 11: first objectsupporting surface structure
- 12: second objectsupporting surface structure
- 14: bottom surface structure
- 15: circular-cylindrical inner exterior surface
- 16, 16A: circular-cylindrical outer exterior surface
- 17: center line
- 18: first longitudinal end surface structure
- 19: second longitudinal end surface structure
- 20A, 20B, 20C, 20D: lashing lines
- 21, 22, 23, 24: corner points
- 25: contact zones for smaller-diameter objects
- 26: contact zones for larger-diameter objects
- 27: central passageway
- 31: first longitudinal side
- 32: second longitudinal side
- α1: first acute angle
- α2: second acute angle
- W: groove width
- Wmax: maximum groove width

Based on the above introductory description, including the brief description of the drawing figures, and based on the above-listed reference signs used in Figs. 1-10, the embodiments of Figs. 1-10 are for the greatest part readily self-explanatory. The following extra explanations are given.

Fig. 1 shows that, in the shown example, the wedge-shaped groove 8 of the carrying element 1 comprises the planar first objectsupporting surface structure 11, the planar second objectsupporting surface structure 12 and the bottom surface structure 14.

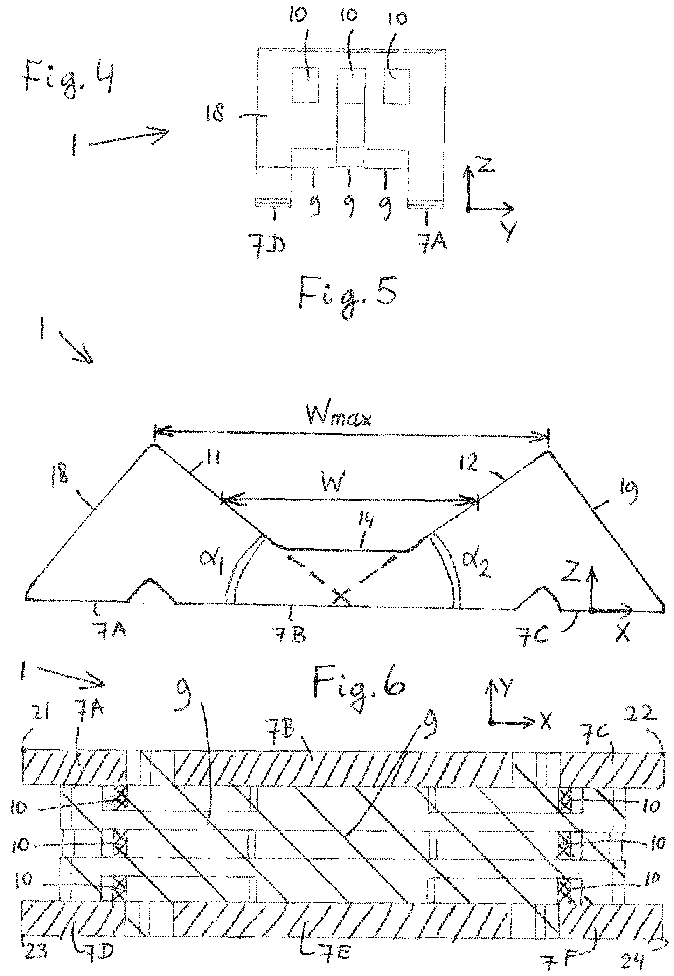

Fig. 5, which is a side view along the Y-axis, shows that the first objectsupporting surface structure 11 is oriented at the first acute angle α1 relative to the XY-plane, and that the second objectsupporting surface structure 12 is oriented at the second acute angle α2 relative to the XY-plane. In the shown example, α1 = 38 degrees and α2 = 38 degrees.

Fig. 5 further indicates, at a certain position along the Z-axis, the groove width W, which is measured between the first objectsupporting surface structure 11 and the second objectsupporting surface structure 12 and parallel to the X-axis. Fig. 5 further indicates the maximum groove width Wmax, which is the largest one of all occurring values of said groove width W as a function of position along the Z-axis. In the shown example, Wmax = 848.4 mm.

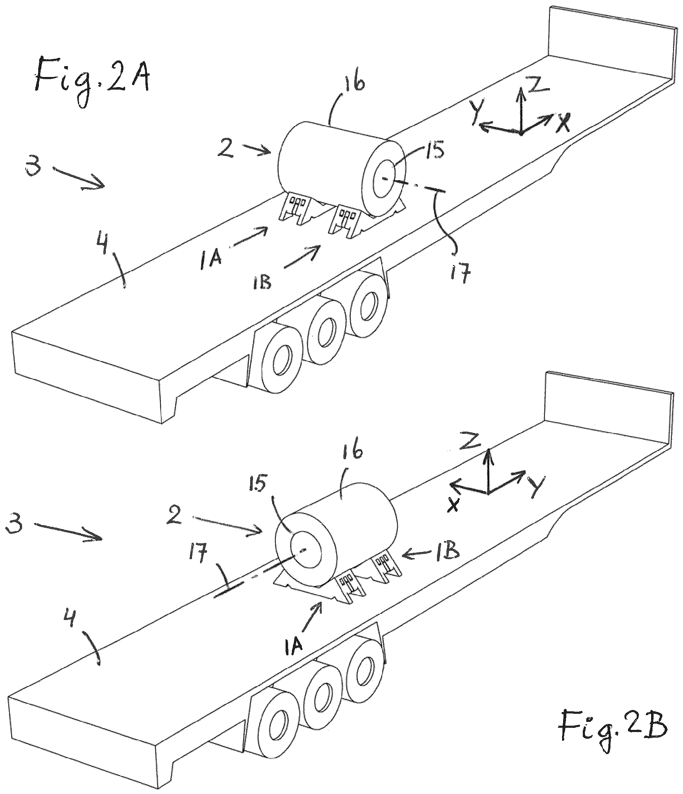

Each of Figs. 2A, 2B shows a situation, in which the two carrying elements 1A, 1B (each of which is identical to the carrying element 1) have been placed alongside one another on a loading floor 4 of a truck 3, and in which the cylindrical object 2 (in this case a roll of steel plate) has been placed on the two carrying elements 1A, 1B. In the shown example, the outer exterior surface 16 of the cylindrical object 2 has a diameter of 1250 mm, and the inner exterior surface 15 of the cylindrical object 2 has a diameter of 625 mm.

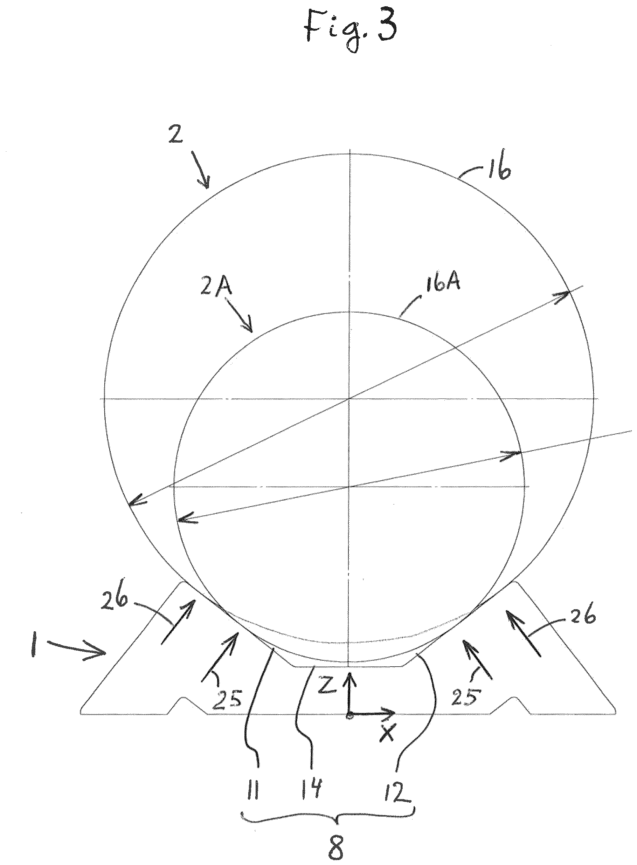

As mentioned, Fig. 3 shows the carrying element 1 of Fig. 1A in a side view along the Y-axis. Fig. 3 further shows the outer exterior surface 16 of the cylindrical object 2, which has a diameter of 1250 mm. Fig. 3 further shows the contact zones 26 between the carrying element 1, on the one hand, and the cylindrical object 2, on the other hand. Additionally, in Fig. 3 another outer exterior surface 16A of another cylindrical object 2A has been shown, wherein the other outer exterior surface 16A of the other cylindrical object 2A has a diameter of 900 mm. Fig. 3 further shows the contact zones 25 between the carrying element 1, on the one hand, and the other cylindrical object 2A, on the other hand. Accordingly, Fig. 3 illustrates that this one, single design of the carrying element 1 according to the invention allows to receive a class of different rolls of steel plate within a broad range of different diameters extending from 900 mm to 1250 mm. Fig. 3 makes clear that the contact zones in case of larger-diameter objects (like the contact zones 26 in case of object 2) are higher up in the groove 8 of the carrying element 1 than the contact zones in case of smaller diameter objects (like the contact zones 25 in case of the object 2A).

Regarding the situation of Fig. 3, it is noted that the weight of the steel plate roll 2 will rougly be about twice the weight of the steel plate roll 2A. This means that the carrying element 1, which is manufactured from LDPE, will deform under the weight of the steel plate roll 2 to a considerably higher extent than it does under the weight of the steel plate roll 2A. Accordingly, the steel plate roll 2 will sink deeper into the groove 8 than the steel plate roll 2 does. Sinking deeper into the groove results in better fixation of the roll 2 in the wedge-shaped groove 8. Accordingly, the carrying element 1 according to the invention automatically adapts its object fixation behaviour dependent on the diameter and weight of the circular-cylindrical object 2.

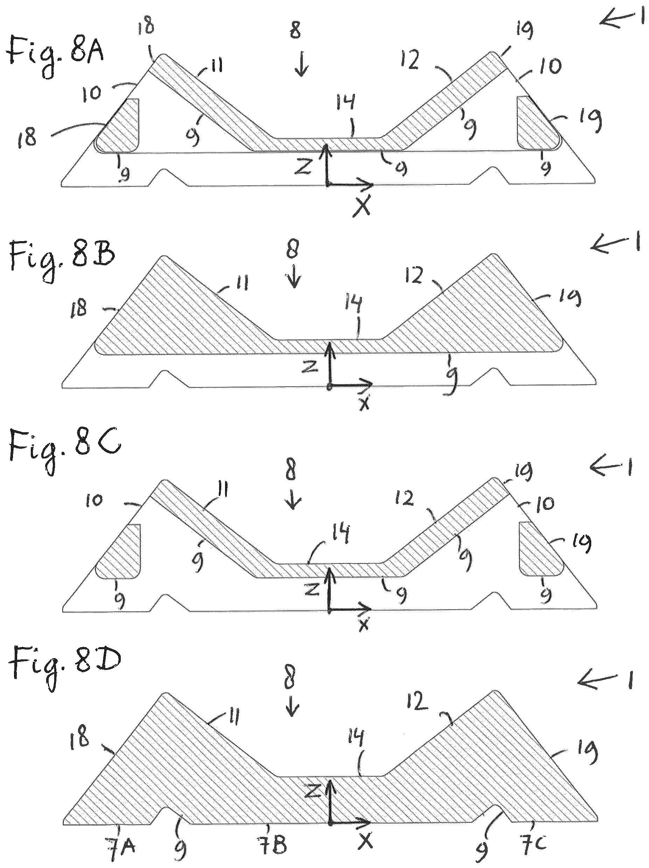

Fig. 6 shows, by a first type of hatching, the planar floorcontacting surface structure 7A, 7B, 7C, 7D, 7E, 7F formed by all parts of the underside 5 of the carrying element 1, which are lying in the XY-plane. Using other terminology, the planar floorcontacting surface structure 7A, 7B, 7C, 7D, 7E, 7F might also be called the planar 'footprint' of the carrying element 1. Fig. 6 further shows, by a second type of hatching which is opposite to and coarser than the first type of hatching, the recessed exterior surface structure 9 of the underside 5 of the carrying element 1. More details of the recessed exterior surface structure 9 can be seen in the cross sections of Figs. 8A, 8B, 8C, 8D. Fig. 6 further shows six cross-hatched areas indicated by the reference numeral 10. These six areas are openings 10, which are also indicated in Figs. 5, 7, 8A, 8C.

Said recessed exterior surface structure 9 of the underside 6 of the carrying element 1 yet further improves the above-mentioned automatical adaptation of the object fixation behaviour dependent on the diameter and weight of the circular-cylindrical object. The reason is that the recessed exterior surface structure 9 allows for extra deformation of the carrying element 1 due to the free space between the recessed exterior surface structure 9 and the floor which is at the XY-plane. At the same time, the recessed exterior surface structure 9 results in higher downforces on the floor via the planar floorcontacting surface structure 7A, 7B, 7C, 7D, 7E, 7F, which results in improved grip on the floor via the planar floorcontacting surface structure 7A, 7B, 7C, 7D, 7E, 7F, because of higher friction resistance against sliding of the carrying element 1 relative to the floor.

In fact, the four corner areas 7A, 7C, 7D, 7F of the planar floorcontacting surface, having the four corner points 21, 22, 23, 24 indicated in Fig. 6, respectively, are thus forming four extra powerful anchoring areas of the carrying element 1 on a floor, thus providing extra resistance against sliding of the carrying element over the floor and extra stability against tilting of the carrying element 1 around the X-axis and the Y-axis of the XY-plane. At the same time, the two strip-shaped areas 7B and 7E, respectively, of the planar floorcontacting surface structure of the carrying element 1 are thus also forming two extra powerful anchoring strips of the carrying element on a floor, thus providing extra resistance against sliding of the carrying element and extra stability against tilting of the carrying element.

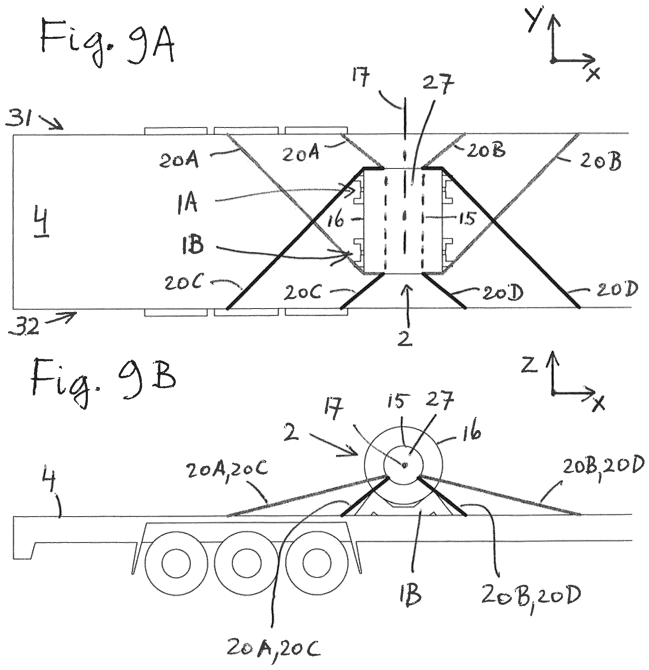

Reference is now made to Figs. 9A-9B, in which the circular-cylindrical object in the form of a roll 2 of steel plate has been lashed down relative to the loading floor 4 of the truck 3 by means of a number of straps and/or chains and/or the like, hereinafter called the lashing lines 20A, 20B, 20C, 20D.

Figs. 9A-9B show that the loading floor 4 has the first longitudinal side 31 and the second longitudinal side 32. Figs. 9A-9B further show that the steel plate roll 2 has the central passageway 27 defined by the circular-cylindrical inner exterior surface 15 of the steel plate roll 2. In the situation of Figs. 9A-9B, each of the four lashing lines 20A, 20B, 20C, 20D is extending through the central passageway 27 of the roll 2, while both opposite ends of the lashing line 20A as well as both opposite ends of the lashing line 20B have been securely fastened to the first longitudinal side 31 of the loading floor 4, and while both opposite ends of the lashing line 20C as well as both opposite ends of the lashing line 20D have been securely fastened to the second longitudinal side 32 of the loading floor 4. It is remarked that said fastening of the ends of the lashing lines to the first and second longitudinal sides 31 and 32 of the loading floor 4 may, for example, be done by means of fastening structures (not shown), which are part of the first and second longitudinal sides 31 and 32, respectively, of the loading floor 4 of the truck.

In Figs. 9A-9B, the combination of:
(i) the two carrying elements 1A and 1B, manufactured from LDPE and carrying the roll 2 on the loading floor 4; and
(ii) the four lashing lines 20A, 20B, 20C, 20D, lashing down the roll 2 relative to the loading floor 4;
appears to address the task to securely fasten the roll 2 to the loading floor 4 remarkably well. Major reason for this is that, under the weight of the roll 2 and under the tensioning force of the lashing lines 20A, 20B, 20C, 20D, the deformability of the LDPE of the carrying elements 1A and 1B provides additional tightening interaction with the lashing lines 20A, 20B, 20C, 20D, as well as additional resistance against sliding of the carrying elements 1A and 1B, as well as additional stability against tilting of the carrying elements 1A and 1B, all of which synergetically improve the fastening of the object 2 to the loading floor 4. And this is achieved by using the easy to handle and broadly applicable equipment in the form of the carrying elements 1A and 1B and the lashing lines 20A, 20B, 20C, 20D.

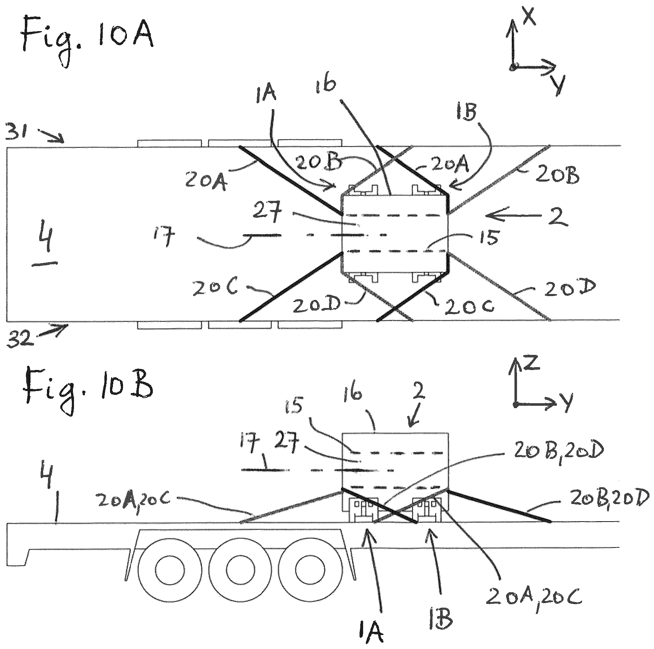

Reference is now made to Figs. 10A-10B, which show a situation which is highly analogous to the situation of Figs. 9A-9B. In fact, the only difference between the two situations is that in Figs. 10A-10B as compared to Figs. 9A-9B, the two carrying elements 1A and 1B together with the roll 2 of steel plate placed thereon are in a different orientation relative to the loading floor 4. All that has been said above for the situation of Figs. 9A-9B applies similarly to the situation of Figs. 10A-10B.

While the invention has been described and illustrated in detail in the foregoing description and in the drawing figures, such description and illustration are to be considered exemplary and/or illustrative and not restrictive. That is, the invention is not limited to the disclosed exemplary and/or illustrative embodiments, but, instead, the invention is defined by the appended claims.

## Claims

1. A carrying element (1) for carrying a circular-cylindrical object (2), such as a roll of steel plate, on a truck (3) for transporting said object, wherein:
the carrying element has an underside (5) and an upperside (6);
the underside comprises a planar floorcontacting surface structure (7A, 7B, 7C, 7D, 7E, 7F) formed by all parts of said underside which are contactingly lying against a horizontal floor when the carrying element is resting with the underside on a horizontal floor, wherein said planar floorcontacting surface structure is lying in an XY-plane of an XYZ-space defined by an X-axis, a Y-axis and a Z-axis, which are orthogonal relative to one another;
the upperside comprises a longitudinal wedge-shaped groove (8) having a longitudinal groove direction, which is parallel to the Y-axis, wherein said longitudinal wedge-shaped groove comprises a planar first objectsupporting surface structure (11) and a planar second objectsupporting surface structure (12), wherein said planar first objectsupporting surface structure and said planar second objectsupporting surface structure are oriented at a first acute angle (α1) and a second acute angle (α2), respectively, relative to said XY-plane, in such manner that a groove width (W) of said longitudinal wedge-shaped groove is decreasing as considered in a direction of increasing groove depth of said longitudinal wedge-shaped groove, said direction of increasing groove depth being directed parallel to the Z-axis and towards said underside of the carrying element, and wherein said groove width (W) as a function of position along the Z-axis is defined as being measured between said planar first objectsupporting surface structure (11) and said planar second objectsupporting surface structure (12) and parallel to the X-axis;
the carrying element is manufactured from Low Density Polyethylene (LDPE);
the first acute angle (α1) is between 33 degrees and 43 degrees, and the second acute angle (α2) is between 33 degrees and 43 degrees; and
a maximum groove width (Wmax) of said groove width (W) of said longitudinal wedge-shaped groove is between 500 mm and 1200 mm, wherein said maximum groove width (Wmax) is defined as being a largest one of all occurring values of said groove width (W) as a function of position along the Z-axis.

2. The carrying element (1) according to claim 1, wherein the first acute angle (α1) is between 36 degrees and 40 degrees, and the second acute angle (α2) is between 36 degrees and 40 degrees.

3. The carrying element (1) according to any one of the preceding claims, wherein the first acute angle (α1) is equal to the second acute angle (α2), with a permissible tolerance of 1 degree, at the most, for the difference between the first acute angle (α1) and the second acute angle (α2).

4. The carrying element (1) according to any one of the preceding claims, wherein said maximum groove width (Wmax) is between 800 mm and 900 mm.

5. The carrying element (1) according to any one of the preceding claims, wherein the underside (5) of the carrying element comprises a recessed exterior surface structure (9) of the carrying element, wherein said recessed exterior surface structure (9), as compared to said planar floorcontacting surface structure (7A, 7B, 7C, 7D, 7E, 7F) which is lying in the XY-plane, is recessed in a direction parallel to the Z-axis and towards the upperside (6) of the carrying element.

6. The carrying element (1) according to claim 5, wherein, as considered in a view on the carrying element along the Z-axis, the carrying element is enclosed by an imaginary rectangle in said XY-plane, said imaginary rectangle having two opposing first sides parallel to the X-axis and two opposing second sides parallel to the Y-axis, and said imaginary rectangle having four corner points (21, 22, 23, 24), which additionally are four corner points, respectively, of four corner areas (7A, 7C, 7D, 7F), respectively, of said planar floorcontacting surface structure (7A, 7B, 7C, 7D, 7E, 7F) of the carrying element.

7. The carrying element (1) according to any one of claims 5 or 6, wherein, as considered in a view on the carrying element along the Z-axis, the carrying element is enclosed by an imaginary rectangle in said XY-plane, said imaginary rectangle having two opposing first sides parallel to the X-axis and two opposing second sides parallel to the Y-axis, and wherein said two opposing first sides parallel to the X-axis are two side edges, respectively, of two strip-shaped areas (7B, 7E), respectively, of said planar floorcontacting surface structure (7A, 7B, 7C, 7D, 7E, 7F) of the carrying element.

8. A method of carrying an object (2) on a truck (3) for transporting said object, wherein said object has a substantially circular-cylindrical outer exterior surface (16) and a center line (17), and wherein the method comprises the steps of:
placing two carrying elements (1A, 1B) according to any one of the preceding claims with their two corresponding undersides (5), respectively, alongside one another on a loading floor (4) of a truck (3), in such manner that the two longitudinal wedge-shaped grooves (8) of the two carrying elements (1A, 1B), respectively, are substantially in line with one another in a direction parallel to the Y-direction of each of the two carrying elements (1A, 1B); followed by
placing said object (2) on the two carrying elements (1A, 1B), in such manner that the center line (17) of the object is substantially parallel to the Y-direction of each of the two carrying elements, and in such manner that said exterior surface (16) of the object is supported by the two first objectsupporting surface structures (11) of the two carrying elements (1A, 1B), respectively, as well as by the two second objectsupporting surface structures (12) of the two carrying elements (1A, 1B), respectively.

9. The method according to claim 8, wherein said steps are further followed by a further step of lashing down said object (2) relative to the loading floor (4) of the truck by means of one or more straps and/or one or more chains and/or the like (20A, 20B, 20C, 20D).

10. The method according to claim 8 or 9, wherein said object (2) is a roll of steel plate.
